# EUROPEAN PATENT APPLICATION

(11) **EP 1 912 236 A1**
(43) Date of publication of application: **16.04.2008**
(21) Application number: 06781789.0
(22) Date of filing: 27.07.2006
(51) Int. Cl.: H01H 37/76, H01C 7/02, H01C 13/00, H01C 13/02, H01M 2/10, H01M 2/34, H01M 10/40

(54) **ELECTRICAL COMPOSITE DEVICE**

(30) Priority: 04.08.2005 JP 2005226910
(71) Applicant: Tyco Electronics Raychem K.K., Kawasaki-shi, Kanagawa 213-8535 (JP)
(72) Inventor: HASUNUMA, Takashi, c/o Tyco Electronics Raychem KK, Inashiki-shi, Ibaraki 3000626 (JP); LAM, Johnny, c/oTyco Electronics Raychem KK, Inashiki-shi, Ibaraki 3000626 (JP); SUZUKI, Katsuaki, c/o Tyco Electronics Raychem KK, Inashiki-shi, Ibaraki 3000626 (JP)
(74) Representative: Johnstone, Douglas Ian
(86) International application number: PCT/JP2006/314878
(87) International publication number: WO 2007/015418

(57) **Abstract**

There is provided an electric device that functions either as a reverting type element or a non- reverting type element depending on the conditions.

Such element includes a polymer PTC element and a temperature fuse member connected in series thereto, in which electric composite element the temperature fuse member is placed such that it is under the thermal influence of the polymer PTC element, and a melting point of a metal composing the temperature fuse member is at least 5 °C higher than a melting point of a polymer composing the polymer PTC element.

## Description

### [Field of the Invention]

The present invention provides an electric composite element, more specifically an electric composite element comprising a polymer PTC element and a temperature fuse member. The present invention further provides an electrical device, such as a secondary battery pack, containing an electrical circuit having such electric composite element, for example as a circuit protection element, and an electric apparatus, such as a charging apparatus, a cellular phone apparatus, etc. in which such electrical device is used.

### [Background Art]

When using an electrical device such as a secondary battery (for example a lithium ion battery) pack or an electrical apparatus using such device, various abnormal conditions may arise. If such abnormal condition continues without being eliminated, the temperature of the electrical device or the electrical apparatus rises, then the device or apparatus gets overheated, and in the worst case may catch fire.

For example, if a failure occurs wherein the terminals of the electrical device are short-circuited, the temperature of the electrical device rises to create an abnormal condition. However, if the short-circuiting of the terminals is detected quickly and eliminated, the abnormal condition is eliminated. For example, when recharging a secondary battery pack, an abnormal condition is created when an unexpected short-circuit occurs through a foreign matter such as a metal piece having electrical conductivity (such as a clip), comes in contact between the terminals; by removing such foreign matter, the condition returns to normal. Such abnormal condition can be described as a "transient abnormal condition (for example, a resolvable temporary failure condition)". Electrical devices incorporate circuit protection elements in order to protect the circuit during abnormalities, but it is not necessarily desirable for the circuit protection device to permanently open the circuit of the electrical device when such transient abnormal condition arises. In this case, the cause of the abnormal condition can be removed relatively easily for example by the device user, so that the circuit protection element is preferably of a reverting type that temporarily opens the electrical circuit, i.e. be a resettable element, so that the electrical device can be re-used once the cause is removed.

In contrast to the above case, if an intrinsic failure exists in the electrical device itself (e.g. a problem exists in the circuit design of the electrical device, so that excessive current inevitably flows under a certain condition), the temperature of the electrical device also rises to create an abnormal condition. Such abnormal condition cannot generally have the cause easily removed by the user side of the device. Even if the current is cut off and the temperature of the electrical device is lowered, the same abnormal condition will arise by accidentally re-applying current, so that an extremely dangerous condition is created. Such abnormal condition is a "serious abnormal condition (e.g. an intrinsic failure condition that cannot be repaired easily)". From the standpoint of safety, in order to avoid the re-occurrence of an overheat condition (and the danger of a fire occurring ultimately) caused by re-applying current without removing the cause of the failure, the circuit protection element incorporated in the electrical device is preferably of a non-reverting type, i.e. non-resettable, that permanently opens the circuit of the electrical device.

An example of an electric element used as a circuit protection element is a polymer PTC element. When excessive current flows through the element, it self-heats through Joule heat and reaches a high temperature, as a result of which the resistance rises to reduce the circuit current; thus the element has the function of protecting the circuit. If an abnormality occurs, not through self-heating of the polymer PTC element but through increase of the ambient temperature of the element, as a result of which the temperature of the PTC element rises, the electrical resistance of the element rises rapidly in a similar way. In this case, if the polymer PTC element is incorporated in the electrical circuit causing the abnormal condition of the ambient temperature rising, the current flowing through the circuit is substantially cut off by the element which has become high-resistance and heating is eliminated from the circuit, as a result of which the increased ambient temperature is decreased.

In the present specification, such rapid rise in the electrical resistance of the polymer PTC element is described as the PTC element "actuating (or tripping (or switching))", and the temperature of the PTC element immediately after the rapid increase of the resistance is called "actuating (or trip (or switching)) temperature". After removing the abnormality of the electrical circuit, the electrical resistance value of the polymer PTC element decreases to the original electrical resistance value or a value close to it, and substantially does not affect when the electrical apparatus is re-used afterwards. In this sense, the polymer PTC element is a reverting type device.

In another embodiment, a temperature fuse member is utilized as an electric element used for a circuit protection element. This is an electrically conductive element formed by a readily fusible metal (may also be an alloy) in various forms (for example wire, strip, plate, and the like). As in the case of a polymer PTC element, when the ambient temperature rises to a prescribed temperature, the member fuses and actuates to open the circuit in which the fuse member is incorporated. The temperature at which the fuse member thus actuates corresponds to the melting point of the metal (or alloy) composing the fuse member, and temperature fuses that actuate at various temperatures are commercially available as fuse members. It is noted that the conductive function of the fuse member is not restored after fusing even when the temperature returns to below the melting point. In this sense, the fuse member is a non-reverting type element, i.e. it is an element that permanently opens the circuit.

A temperature protection element wherein a polymer PTC element and a meltable metal as a fuse member are connected in series is disclosed in the following Patent Reference 1. This protection element utilizes the fact that, when the ambient temperature exceeds a prescribed temperature, the conductive polymer of the PTC element expands thermally and overheats, as a result of which the conductive polymer heats up causing the fuse member to melt. In other words, the protection element is designed so that the fuse member inevitably fuses when the PTC element is actuated. In other words, the protection device disclosed is of a non-reverting type even though the polymer PTC element is used.
[Patent Reference 1] Laid-open Patent Application No. 2003-317593

### [Disclosure of the Invention]

### [Problem to be Solved by the Invention]

As described above, various abnormal conditions may arise in an electric apparatus. When an abnormal condition occurs, some electric apparatuses require the electrical circuit to be opened all the time, but there are some electric apparatuses wherein it is desirable that the current flow in the electric apparatus is temporarily or permanently cut off depending on the type of the abnormal condition that has occurred. In other words, there are cases where it is desirable to cut off the current temporarily in a transient abnormal condition, and to cut off the current permanently in a serious abnormal condition. In other words, there are cases where it is desirable to have both the functions of a reverting type element as well as a non-reverting type element and to exercise either function depending on the circumstances.

### [Means to Solve the Problem]

As a result of close consideration of the above problem, it has been found that the temperature of the electrical apparatus (or electrical device), in the temporary abnormal condition, is relatively more often lower than in the serious abnormal condition; in such cases, it is not desirable to permanently cut off the current flowing through the circuit of the electrical apparatus (or the electrical device), but rather to cut off the current temporarily. Conversely, it has also been found that, in the serious abnormal condition, the temperature of the electrical apparatus (or the electrical device) was relatively more often considerably higher than in the temporary abnormal condition; in such cases, it is not desirable to temporarily cut off the current flowing through the circuit of the electrical apparatus (or the electrical device) but rather to cut off the current permanently.

It has also been found that, when the polymer PTC element is in an actuated state, the temperature of the element itself is not very different from the melting point of a polymer composing an electrically conductive composition of a PTC member constituting the element if the ambient temperature around the element is low; if the ambient temperature around the element is high, on the other hand, the temperature of the element itself becomes considerably higher than the melting point of the polymer.

More specifically, in considering the relationship between the temperature of the polymer PTC element when actuated (in particular the surface temperature of the element (and thus a temperature of an electrode of the PTC element)), i.e. the temperature of the element after the resistance of the polymer PTC element has rapidly increased, and the ambient temperature around the polymer PTC element, i.e. the temperature of the environment in which the element is placed, the following results were found: when the element is in an actuated state, the generated calorific value of the element and the released calorific value from the element to the ambient is balanced and the element reaches a certain equilibrium temperature (this equilibrium temperature is called the element temperature of in this specification); although, in a region where the ambient temperature is sufficiently lower than the melting point (e.g. about 30 °C lower or more lower than the melting point) of the polymer (in particular crystalline polymer) in the conductive polymer composition used in the polymer PTC element, the temperature of the polymer PTC element is at the melting point of the polymer or slightly higher, as the ambient temperature rises, the element temperature becomes higher than the melting point of the polymer, and when the ambient temperature exceeds the melting point of the polymer, the device temperature will become considerably higher (e.g. 10°C - 20°C higher, or more higher) than the melting point of the polymer.

Therefore, when the ambient temperature rises, the polymer PTC element in an actuated state can reach a temperature considerably higher than the melting point of its constituent polymer. Thus, it has been found that, if a fuse member that actuates (i.e. fuses) at such a high temperature, i.e. a fuse member whose melting point is considerably higher than the melting point of the polymer, and the polymer PTC element are thermally connected, the actuation of the polymer PTC element not reaching such a high temperature brings about a reverting function, while the actuation of the polymer PTC element that has reached such a high temperature will cause the fuse member to actuate and fuse to cut off the current permanently, i.e. bring about a non-reverting function.

It is noted that if the actuation of the polymer PTC element inevitably causes actuation of the fuse member, the purpose of the invention cannot be achieved. As described above, the temperature of the polymer PTC element when actuated in a low ambient temperature is at or slightly higher than the melting point of the polymer, and the actuating temperature of the fuse member also has some allowance. If this is taken into consideration, the actuating temperature of the fuse member, i.e. the melting point of the metal (including alloy) constituting the fuse member, needs to be at least 5 °C higher than the melting point of the polymer.

Based on the knowledge described above, the present invention provides an electric composite element comprising a polymer PTC element and a temperature fuse member connected in series thereto, the electric composite element being characterized by the temperature fuse member being placed so that it is under the thermal influence of the polymer PTC element, and the melting point of the metal composing the temperature fuse member being at least 5 °C higher, preferably at least 10 °C higher, and more preferably at least 15 °C higher, for example at least 20 °C higher than the melting point of the polymer composing the polymer PTC element.

In the electric composite element of the present invention, the polymer PTC element may be any polymer PTC element known in the field of the invention as long as it can solve the problem described above. For example, the PTC element constituting the element of the present invention has an electrical resistance at room temperature (generally in the range of 20 °C - 40 °C) of preferably about 5 mΩ - 200 mΩ, more preferably about 5 mΩ - 100 mΩ, and an electrical resistance after actuation of preferably at least 500 times, more preferably at least 1000 times, for example 5000 times, and particularly preferably at least 10000 times the electrical resistance before actuation (which is equivalent to the resistance at room temperature).

Generally, the polymer PTC element comprises a polymer PTC member (for example a laminar polymer PTC member) formed (for example by extrusion molding) from an electrically conductive polymer composition, and metal electrodes (for example metal foils) bonded to the two sides of the polymer PTC member. The conductive polymer composition generally comprises a polymer (for example polyethylene (PE), polyvinylidene fluoride (PVDF), ethylene-butyl acrylate copolymer (EBA), ethylene-vinyl acetate copolymer (EVA), etc.) and electrically conductive fillers (for example carbon black, nickel fillers, nickel-cobalt fillers, etc.) dispersed therein. "The polymer composing the polymer PTC element" in the present specification means just mentioned such a polymer contained in the electrically conductive polymer composition.

For example, when using the electric composite element of the present invention as a circuit protection element for a secondary battery pack, it is desirable that it exhibits the function of a reverting type element in abnormal conditions occurring during recharging when the battery pack is at a temperature of up to about 60°C. On the other hand, in abnormal conditions occurring when the temperature of the battery pack exceeds 90 °C, it is desirable that the element exhibits the function of a non-reverting type element. In this case, a particularly preferred polymer is EVA or EBA, and the use of a fuse member having an actuating temperature of 100 °C - 110 °C is preferred.

In the present specification, it is noted that the melting point of the polymer composing the polymer PTC element means a temperature measured by DSC (a temperature at the top of the peak) based on JIS K 7121 (Method of Measuring the Transition Temperatures of Plastics) applied to the measurement of crystalline transition temperatures of plastics. The main measuring conditions are as follows:
Temperature condition: 20 °C - 180°C
Temperature increase rate: 10 °C/min.
Measurement atmosphere: nitrogen
Instrument: Seiko Instruments Inc., EXSTAR6000/6200

In the present invention, the "temperature fuse member" is an electrically conductive element of a fusible metal (which may be an alloy) generally called "temperature fuse"; such fuse members have various shapes, are known to have various actuating temperatures, and are commercially available. For example, alloys of tin, lead, bismuth, etc., are used as the fusible metal. The temperature fuse member may comprise an electrically conductive members such as a lead at its end. The electric composite element of the present invention may comprise a lead required for the element to be incorporated into a predetermined circuit. Also, another lead may be used if required for connecting between the polymer PTC element and the temperature fuse member. The "melting point of the temperature fuse member" means the melting point of the fusible metal constituting the conductive element, and for practical purposes, a median of the actuating temperatures given in the catalog of a commercially available temperature fuse may reasonably be used as the melting point of the temperature fuse member.

In the present invention, the "temperature fuse member being placed so that it is under the thermal influence of the polymer PTC element" means that the PTC element and the temperature fuse member are connected in placement so that the heat of the polymer PTC element is transferred to the fuse member, as a result of which he actuation of the fuse member, i.e. the melting of the metal constituting the temperature fuse member (and the opening of the circuit thereafter), is effected. This connection may be direct, or indirect via a thermally conductive member.

In one preferred specific embodiment, the polymer PTC element and the temperature fuse member are in direct contact with each other. For example, it is particularly preferred that one surface of the PTC element (for example its electrode) or a part thereof and a certain surface (outer surface) of the temperature fuse member or a part thereof are in planar contact. In this case, heat is efficiently transferred through the planar contact. Also, as long as the heat of the polymer PTC element can be transferred to the temperature fuse member and can actuate the fuse member, a part of the lead (for example a tip of the lead, an end surface of the lead or the like) of the temperature fuse member may be bonded to an electrode of the polymer PTC element. In this case, the contact will substantially be a point contact or a linear contact. Further, as long as the heat of the polymer PTC element is transferred to the temperature fuse member, the polymer PTC element and the temperature fuse member may be connected indirectly through a thermally conductive material. For example, the polymer PTC element and the temperature fuse member may be connected by a conductor such as a metal wire, a metal strip, or a lead wire.

### [Effect of the Invention]

In the electric composite element of the present invention, the polymer PTC element is in an actuated stated without triggering the melting of the temperature fuse member when the ambient temperature is low, i.e. act as a reverting type element, while on the other hand, if the polymer PTC element falls into a tripped state when the ambient temperature is high, it melts the temperature fuse member connected thereto, i.e. act as a non-reverting type element.

When used as a circuit protection element, such electric composite element of the present invention acts as a reverting type circuit protection element with the ambient temperature of the element in a relatively low temperature, and acts as a non-reverting type circuit protection element when the ambient temperature of the element becomes relatively high. As a result, the electric composite element of the present invention can exhibit a reverting type or a non-reverting type functional action depending on the abnormal condition.

### [Brief Explanation of the Drawings]

[Figure 1] A side view and a plan view of the electric composite element of the present invention are shown schematically.
[Figure 2] A production process of an electric composite element of the present invention is shown schematically,
[Figure 3] A graph showing the relationship between the ambient temperatures around Polymer PTC Element A and Polymer PTC Element B, and electrical resistances (upon being unactuated and actuated).
[Figure 4] A graph showing the relationship between the surface temperature f Polymer PTC Temperature A when actuated and the ambient temperature.
[Figure 5] A graph showing the relationship between the surface temperature of Polymer PTC Element B when actuated and the ambient temperature.
[Figure 6] Figure 6 shows the non-reverting type function of the electric composite element of the present invention wherein a test time, ambient temperature, and leak current are shown.

### [Explanation of the Legends]

10 - electric composite element
12 - polymer PTC element
14 - fuse member
16, 18 - lead
20 - insulation substrate
22 - lead
24 - contact
26, 28 - lead
30 - resin layer

### [Embodiments to Practice the Invention]

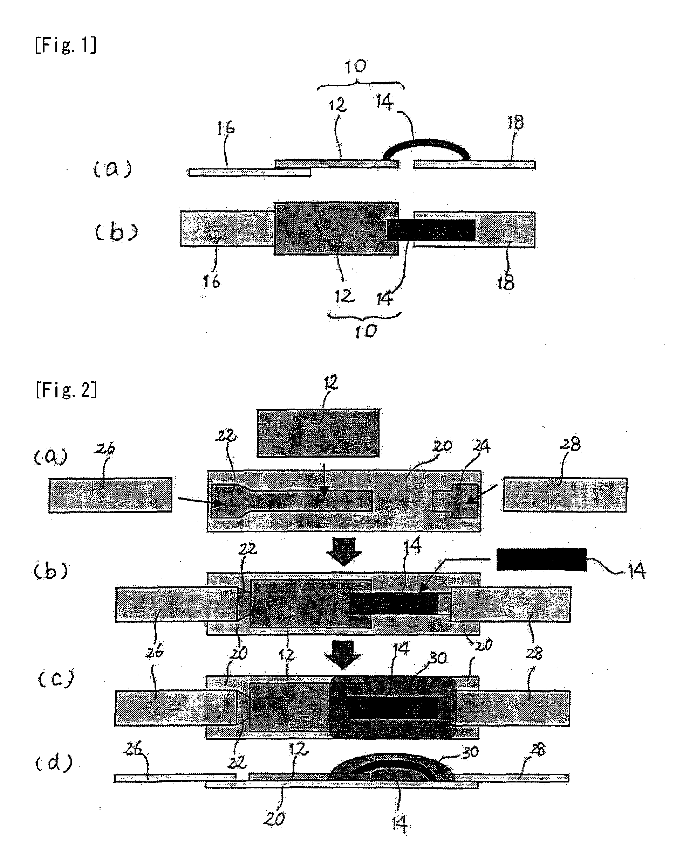

Next, the electric composite element according to the present invention will be more specifically explained with reference to the attached drawings. A schematic side view and a schematic plan view of an example of the electric composite element of the present invention are shown in Figure 1(a) and Figure 1 (b), respectively.

The electric composite element 1 D of the present invention comprises a polymer PTC element 12 and a temperature fuse member 14 in a strip form connected directly to one of the electrodes (not shown) of the element 12. The polymer PTC element 12 and the temperature fuse member 14 may be connected by any appropriate manner such as electrical welding, resistance welding, soldering, laser welding, and the like. In the embodiment shown, the temperature fuse member 14 is slightly bent, and its end surface (substantially in a line form) is connected to a surface electrode of the polymer PTC element 12.

Also, a lead 16 (for example an Ni lead) is connected to the other electrode (not shown) of the polymer PTC element 12. Another lead 18 is connected to the other end of the fuse member 14. These leads may be used to connect the electric composite element 10 to a predetermined electrical circuit.

In a preferred embodiment of the present invention, the electric composite element is preferably structured to be placed on a support member which supports the element. In other words, the electric composite element of the present invention is structured by placing the PTC element and the fuse member on the support member. When structured in this way, the electric composite element may be treated as a single element and the handling of the electric composite element is made easier and convenient. Such an embodiment is shown schematically in Figure 2. In Figure 2, the process of producing the element of the present invention on the support member is shown in order.

First, an insulation substrate 20 is prepared on which the electric composite element 10 is placed. On the insulation substrate 20, a lead 22 to be connected to the electrode of the polymer PTC element 12 has been formed in advance. In the embodiment shown, a contact 24 has also been formed in advance on the insulated substrate, to which one end of the temperature fuse member is to be connected. Leads 26 and 28 are connected to the lead 22 and contact 24 to electrically connect the electric composite element of the present invention to the predetermined electrical circuit.

As shown in the schematic plan view of Figure 2(a), the polymer PTC element 12 and the leads 26 and 28 are, as shown by the arrows, placed on the insulation substrate 20 having the lead 22 and the contact 24 formed in advance, and electrically connected. This connection may be performed in any appropriate manner; it may, for example, be performed by reflow soldering.

Next, as shown in the schematic plan view of Figure 2(b), the fuse member 14 is placed so as to straddle between the electrode of the PTC element 20 and the contact 24 and electrically connected. By this means, the electric composite element 10 of the present invention supported by the support member 20, is obtained. It is noted that leads 22, 26, and 28, and the contact 24 are formed as needed, and are not necessarily essential to the electric composite element 10 of the present invention.

The support member 20 supporting the electric composite element 10 is placed in a predetermined location of an intended electrical device or electrical apparatus, preferably in a location sensitive to temperature changes when an abnormal condition occurs, and incorporated in a predetermined manner into the electrical circuit. It is noted that instead of an independent support member as shown, a part of the electrical device or electrical apparatus which is to use the electric composite element may be used as the support member. For example, a part of the casing which contains an electrolyte in a secondary battery pack may be used as the support member.

Next, as shown in the schematic plan view in Figure 2(c), the temperature fuse member 14 as well as its surrounding areas, where needed, may be covered with a resin layer 30. By covering with the resin layer 30 in this way, the connection between the temperature fuse member 14 and the polymer PTC element 12 is protected to prevent unintentional mechanical damage, while at the same time heat loss, caused by heat escaping to the surroundings when heat generated by the polymer PTC element is transferred to the fuse member 14, is suppressed, so that the time for the fuse member to melt through the surface temperature of the PTC element when actuated by the occurrence of an abnormal condition may be shortened. In other words, the sensitivity for detecting the abnormality may be enhanced.

Any appropriate resin may be used for such resin, but since there is a possibility of the resin layer reaching a high temperature, silicon-based resins (silicone resins, etc.) for example may be used. Other resins that can be used are, for example, epoxy resins, urethane resins and the like.

Figure 2(d) is a side view of Figure 2(c), but the lead 22 and the contact 24 are not shown. Although in the embodiment shown, only the end of the temperature fuse member 14 is connected to the polymer PTC element 12 (as can be seen from the Figure, such connection is substantially close to a linear contact), in another embodiment, the end portion of the temperature fuse member 14 is flat and its bottom surface may be connected to the electrode surface of the polymer PTC element, i.e. a portion of the polymer PTC element and a portion of the temperature fuse member may be in planar contact. In this case, there is an advantage in that the heat of the polymer PTC element 12 is easily transferred to the temperature fuse member 14.

### [Example]

### [Production of Polymer PTC Elements]

As summarized below, Polymer PTC Elements A and B were produced using the known methods and materials.

### [Polymer PTC Element A]

A conductive composition was obtained by mixing 58 vol% of ethylene-vinyl acetate copolymer (EVA, commercially available under the product name UE635-000 from Equistar Chemicals; melting point: about 85°C) as the polymer and 42 vol% of carbon black (commercially available under the product name PM0342 from Columbian Chemical) as the conductive filler.

The conductive composition obtained was extruded to obtain a sheet-form extrudate. Nickel metal foils (commercially available under the product name NIT-CF-35#31 (nickel-plated copper foil) from Fukuda Metal Foil and Powder Industry; thickness 0.035 mm) were thermally pressed on both surfaces as electrodes, after which the sheet was divided to obtain Polymer PTC Elements A. The size of Polymer PTC Element A was 3.0 mm x 12.0 mm x 0.18 mm.

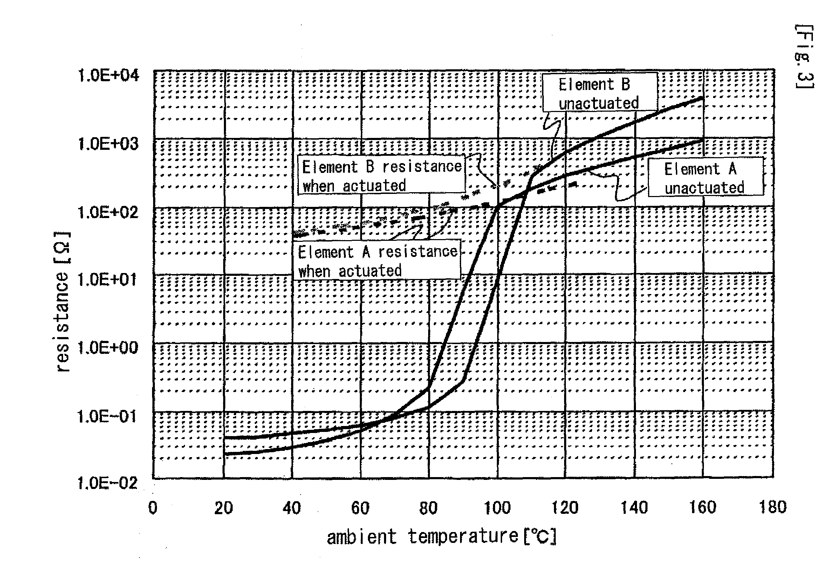

Leads were installed on the electrodes of Polymer PTC Element A thus obtained and the basic performance of Polymer PTC Element A was measured. In other words, Polymer PTC Element A was placed in a constant temperature oven and the electrical resistance of the unactuated Polymer PTC Element A was measured while changing the temperature of the constant temperature oven as the ambient temperature. Other Polymer PTC Element A was actuated through an applied voltage of DC5V while changing the temperature of the constant temperature oven, and the leak current upon being actuated was measured and the resistance when actuated was measured. Figure 3 shows the results of the measurement.

### [Polymer PTC Element B]

A conductive composition was obtained by mixing 58 vol% of ethylene-butyl acrylate copolymer (EBA, commercially available under the product name EA705-009 from Equistar Chemicals; melting point: about 95°C) as the polymer and 42 vol% of the above mentioned carbon black as the conductive filler.

Using the conductive composition obtained, Polymer PTC Elements B were obtained in the same way as Polymer PTC Elements A. Leads were installed on the electrodes of Polymer PTC Element B thus obtained, and as before, the electrical resistance of the unactuated Polymer PTC Element B was measured; the electrical resistance of Polymer PTC Element B when actuated was also measured. Figure 3 shows the results of the measurement.

As is clear from Figure 3, both the polymer PTC elements obtained have the functions of a PTC element. For example, the resistance in room temperature - low temperature is in the order of 1 x 10⁻² Q; when the element temperature rises or the element actuates, the resistance becomes greater by about 5 x 10² - 1 x 10³ times.

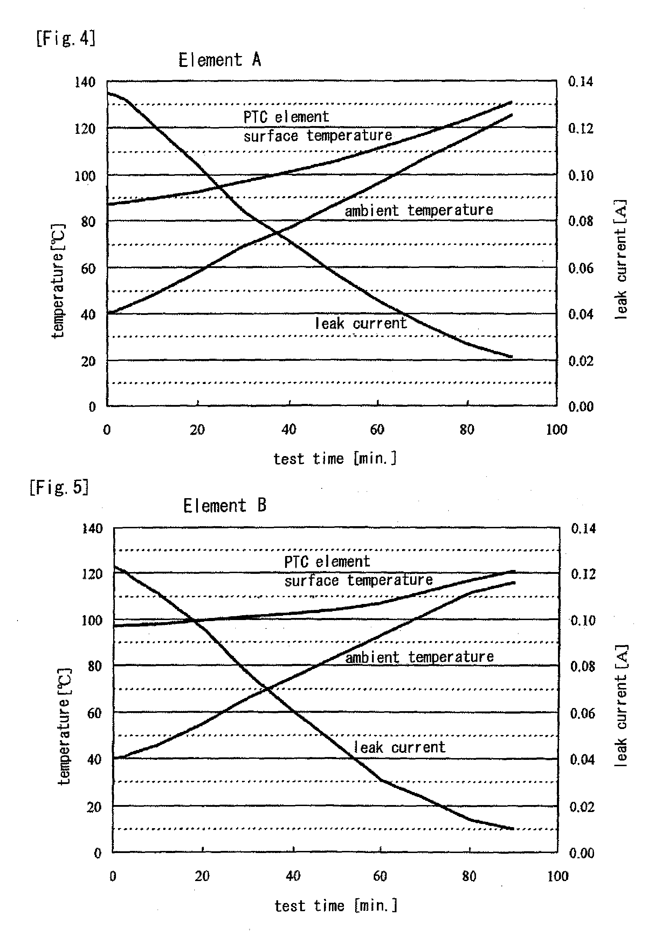

Next, with respect to the produced Polymer PTC Element A and Polymer PTC Element B, the surface temperatures of the elements when actuated were measured using a constant temperature oven and changing the ambient temperature of the elements. The surface temperature of the element is measured by affixing a thermocouple on the surface of the element (i.e. its electrode). To actuate, DC511 was applied as in the previous measurement, and the resistance was obtained by measuring the leak current. Measurement results are shown in Table 1 (element A) and Table 2 (element B), as well as in Figure 4 (element A) and Figure 5 (element B).

**Table 1 (Element A):**

| Test Time (minutes) | 0 | 4 | 10 | 20 | 30 | 40 | 50 | 60 | 70 | 80 | 90 |
|---|---|---|---|---|---|---|---|---|---|---|---|
| Ambient Temp(°C) | 40.5 | 43.0 | 48.0 | 58.0 | 69.0 | 77.0 | 86.5 | 96.0 | 106.0 | 115.5 | 125.5 |
| PTC Element Surface Temp(°C) | 87.0 | 88.0 | 89.5 | 92.5 | 97.0 | 101.0 | 105.5 | 111.0 | 117.0 | 123.5 | 131.0 |
| Leak Current (A) | 0.135 | 0.132 | 0.122 | 0.104 | 0.084 | 0.071 | 0.058 | 0.046 | 0.036 | 0.027 | 0.021 |

**Table 2 (Element B):**

| Test Time (minutes) | 0 | 4 | 10 | 20 | 30 | 40 | 50 | 60 | 70 | 80 | 90 |
|---|---|---|---|---|---|---|---|---|---|---|---|
| Ambient Temp (°C) | 40.0 | 42.0 | 46.0 | 55.0 | 66.0 | 75.0 | 84.0 | 93.0 | 102.0 | 111.5 | 116.0 |
| PTC Element Surface Temp (°C) | 97.0 | 97.5 | 98.0 | 99.5 | 101.0 | 102.5 | 104.0 | 107.0 | 112.0 | 117.0 | 121.0 |
| Leak Current (A) | 0.123 | 0.118 | 0.111 | 0.096 | 0.076 | 0.060 | 0.046 | 0.031 | 0.023 | 0014 | 0.010 |

From these results, it can be seen that, with either polymer PTC element, the surface temperature of the element is slightly higher than the melting point of the polymer when the ambient temperature around the element is considerably lower than the melting point of the polymer, for example about 35 °C lower, while on the other hand, the surface temperature of the element is considerably higher than the melting point of the polymer when the ambient temperature around the element is higher than the melting point of the polymer.

In the case of Polymer PTC Element A using EVA for example, the surface temperature of the device is about 90 °C when the ambient temperature is about 50°C; when the ambient temperature is about 85 °C, the surface temperature of the device is about 105 °C. Also in the case of Polymer PTC Element A, the surface temperature of the device is about 108 °C when the ambient temperature is about 90 °C. A case is now considered wherein an electric composite element of the present invention is composed by combining a temperature fuse member having a melting point of 108°C with this PTC device (difference from the melting point of the polymer = about 23 °C) and used as a circuit protection device.

In this case, if the ambient temperature is less than 90 °C and Polymer PTC Element A is actuated, the surface temperature of Polymer PTC Element A will not exceed 108°C, so that the temperature fuse member will not melt. Therefore, the electric composite element will function as a reverting type circuit protection element. However, if the ambient temperature exceeds 90 °C and Polymer PTC Element A is actuated, the surface temperature of the PTC device will exceed 108 °C and the temperature fuse member will melt. Therefore, the electric composite element will function as a non-reverting type circuit protection element.

As can be seen from the above, even though the fuse member that actuates at 108°C is used in the electric composite element of the present invention, the composite device can function as a non-reverting type element when the ambient temperature is 90°C. In other words, it is possible to lower the temperature at which a serious abnormal condition can be detected. This is because the heat of the polymer PTC element can be utilized.

Next, a case is considered wherein a composite element that functions as a non-reverting type element when the ambient temperature exceeds 90 °C, as in the above case, is composed using Polymer PTC Element B. Since with Polymer PTC Element B, the surface temperature of the element is about 105 °C at an ambient temperature of 90 °C, a fuse member that actuates at 105 °C is used. In this case, it differs in that the difference of the actuation temperature from the melting point of the polymer is 10°C, but substantially the same can be said here as what was explained using Polymer PTC Element A as the example.

Thus, by combining a fuse member having a melting point at least 5°C higher than the melting point of the polymer composing the polymer PTC element, the composite element can function as a reverting or a non-reverting type element depending on the ambient temperature. Various low-melting point metals (or alloys) are known as the metal used for the temperature fuse member, and may be appropriately selected based on the ambient temperature at which it should be determined that a serious abnormal condition exists, the relationship between the ambient temperature of the polymer PTC element and its surface temperature upon actuation, as well as the melting point of the metal of the fuse member and the relationship between that and the melting point of the polymer.

Specifically, a fuse member preferably combined with a polymer PTC element can be selected in the following way: first, the ambient temperature at which it should be determined that a serious abnormal condition exists (Ta) is decided. This decision is appropriately selected depending on the electrical device or electrical apparatus which uses the composite element. Next, from a previously obtained relationship between the ambient temperature of the polymer PTC element and the surface temperature of the element when actuated, the surface temperature of the polymer PTC element Ts is obtained when the ambient temperature is Ta, and a fuse member actuating at Ts is selected. By selecting in this way, when the ambient temperature around the element is lower than Ta, the surface temperature of the element is lower than Ts, and since the fuse member will not melt, the element has the function of a reverting type element. On the other hand, when the ambient temperature around the element is Ta or higher, the surface temperature of the element becomes Ts or higher, and since the fuse member will melt, the element has the function of a non-reverting type element.

In practice, if the temperature difference between Ts, which is also the actuating temperature of the fuse member, and the melting point of the polymer is too small, the possibility of the element malfunctioning may be increased. For example, the fuse member may actuate at a temperature lower than the nominal actuating temperature. In such a case, the fuse member may melt so that the element may function as a non-reverting type element even though it should function as a reverting type element. In order to reduce the possibility of such malfunctioning, a certain amount of temperature difference should be set as a safety factor between the melting point of the metal and the melting point of the polymer in the polymer PTC element, which is correlated to the surface temperature of the polymer PTC element when actuated. In the case of the electric composite element of the present invention, such temperature difference is at least 5 °C. The larger this temperature difference is, the smaller the possibility of malfunctioning is.

Therefore, if the temperature difference between the Ts selected as described above and the melting point of the polymer is too small, a higher Ta is decided anew, and using this higher Ta, the fuse member is selected as described above. When Ta is made higher, Ts becomes higher, as a result of which the melting point of the fuse member becomes higher which makes the temperature difference between Ts and the melting point of the polymer larger.

An alternate method may be to prepare different polymer PTC elements and select a different fuse member based on the relationships between the ambient temperature around the polymer PTC elements and the surface temperatures of the elements when actuated as described above. Needless to say, the larger the temperature difference between Ts and the melting point of the polymer, for example at least 10 °C, preferably at least 15 °C, and more preferably at least 20 °C is more preferable in terms of malfunctioning.

### [Production of Electric Composite Element]

An electric composite element according to the present invention, as shown in Figure 2(d), was produced by connecting directly in series Polymer PTC Element A obtained as described above and a temperature fuse member (manufactured by Uchihashi Estec; product name 44E; nominal actuating temperature 108 °C). With this temperature fuse member, a wire conductor of a fusible metal is placed inside a cylindrical having leads on both ends. In this electric composite element, this cylindrical body is positioned on a polymer PTC element placed on an insulation substrate, and the cylindrical body is further covered by a silicone resin layer.

### [Confirmation of Reverting Function]

After measuring the electrical resistance of the electric composite element produced as described above, the element was actuated at various actuating currents at a room-temperature (about 23 °C) ambient temperature. After maintaining in this state, the temperature was brought back to room temperature and the resistance of the element was measured. The results are shown in Table 3 and Table 4.

**Table 3 (Actuating Currents: 30A and 40A):**

| | Actuating Current 30A | | | Actuating Current 40A | | |
|---|---|---|---|---|---|---|
| | Initial Resistance | Time to Trip | Resistance After Actuation | Initial Resistance | Time to Trip | Resistance After Actuation |
| | (mΩ) | (msec) | (mΩ) | (mΩ) | (msec) | (mΩ) |
| 1 | 29.8 | 33.0 | 47.3 | 31.0 | 15.5 | 49.6 |
| 2 | 31.9 | 30.0 | 50.9 | 30.2 | 17.0 | 47.8 |
| 3 | 33.0 | 28.0 | 53.3 | 30.6 | 16.0 | 48.6 |
| Average | 31.57 | 30.33 | 50.50 | 30.60 | 16.17 | 48.67 |

**Table 4 (Actuation Currents: 50A and 60A)**

| | Actuating Current 50A | | | Actuating Current 60A | | |
|---|---|---|---|---|---|---|
| | Initial Resistance | Time to Trip | Resistance After Actuation | Initial Resistance | Time to Trip | Resistance After Actuation |
| | (mΩ) | (msec) | (mΩ) | (mΩ) | (msec) | (mΩ) |
| 1 | 32.0 | 10.0 | 51.1 | 30.5 | 5.5 | 50.9 |
| 2 | 30.5 | 11.0 | 49.0 | 29.3 | 5.5 | 47.8 |
| 3 | 31 .8 | 10.5 | 51.0 | 32.6 | 5.0 | 53.7 |
| Average | 31.43 | 10.50 | 50.37 | 30.80 | 5.33 | 50.80 |

In each case, the electrical resistance of the element is in the same order before the actuation and after the actuation; it can therefore be seen that no substantial difference has occurred in the function of the element even after the actuation. In other words, it can be seen that, when the ambient temperature is low, the composite device exhibits a reverting function.

### [Confirmation of Non-Reverting Function]

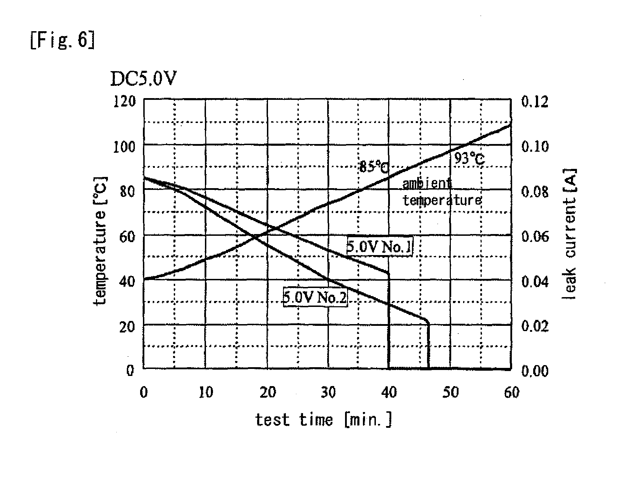

The electric composite element, manufactured as described above, was placed in a constant temperature oven, and actuated at an ambient temperature of 40°C (actuating current: 3 A), after which the temperature of the constant temperature oven, i.e. the ambient temperature, was increased at about 1 °C/minute and the leak current measured. The results are shown in Figure 6.

As can be seen from Figure 6, the ambient temperature around Element No. 2 reached about 93°C approximately 47 minutes after starting the test, at which point the leak current dropped rapidly to zero. With respect to Element No. 1, the ambient temperature reached about 85°C approximately 40 minutes after starting the test, at which point the leak current dropped rapidly to zero. In other words, it can be seen that, in both cases, the composite element exhibited a non-reverting function with the fuse member fusing. It is noted that even though the fuse member having the actuating temperature of 104 °C was used, the non-reverting type function was exhibited at an ambient temperature of about 90°C.

The present application claims a priority based on Japanese Patent Application No. 2005-226910 (filed on August 4, 2005, title of the invention: Electric Composite Element), and all of the contents of the application are incorporated in the present specification by reference.

## Claims

1. An electric composite element comprising a polymer PTC element and a temperature fuse member connected in series thereto, which electric composite element is **characterized in that** the temperature fuse member is placed such that it is under the thermal influence of the polymer PTC element, and a melting point of a metal composing the temperature fuse member is at least 5 °C higher than a melting point of a polymer composing the polymer PTC element.

2. The electric composite element according to Claim 1, **characterized in that** the melting point of the metal composing the temperature fuse member is at least 10°C higher than the melting point of the polymer composing the polymer PTC element.

3. The electric composite element according to Claim 1, **characterized in that** the melting point of the metal composing the temperature fuse member is at least 20 °C higher than the melting point of the polymer composing the polymer PTC element.

4. The electric composite element according to any one of Claims 1 to 3, **characterized in that** the polymer composing the polymer PTC element is an ethylene-vinyl acetate copolymer or an ethylene-butyl acrylate copolymer.

5. The electric composite element according to any one of Claims 1 to 4, wherein an electrical resistance of the polymer PTC element after its actuation is at least 500 times its electrical resistance at normal temperature.

6. The electric composite element according to any one of Claims 1 to 5, wherein the temperature fuse member is at least partially covered by a resin layer.

7. The electric composite element according to any one of Claims 1 to 6, wherein the polymer PTC element is placed on an insulation substrate.

8. An electric device comprising the electric composite element according to any one of Claims 1 to 7.

9. The electric device according to Claim 8 as a battery pack, wherein the electric composite element is placed on the outside of a casing of the battery pack.

10. An electric apparatus comprising the battery pack according to Claim 9.

11. The electric apparatus according to Claim 10 as a cellular phone device.
